# EUROPÄISCHE PATENTANMELDUNG

(11) **EP 2 653 350 A1**
(43) Veröffentlichungstag der Anmeldung: **23.10.2013**
(21) Anmeldenummer: 12164601.2
(22) Anmeldetag: 18.04.2012
(51) Int. Cl.: B60R 16/023, G07C 5/08

(54) **Fahrzeugnetz**

(71) Anmelder: Siemens Aktiengesellschaft, 80333 München (DE)
(72) Erfinder: Feld, Joachim, 90451 Nürnberg (DE)

(57) **Zusammenfassung**

Um in einem Fahrzeugnetz (10) mit mehreren Steuereinheiten (li) zur Steuerung und Überwachung eines Fahrzeugs eine Fehlersuche nach solchen Softwareaktualisierungen zu erleichtern, die neue Nachrichtenarten einführen, umfasst eine der Steuereinheiten (li) mindestens eine gemeinsame Diagnosevorrichtung (11) für Diagnoseaufgaben mehrerer der Steuereinheiten (li). Die Erfindung betrifft auch ein entsprechendes Verfahren (100) zur Überwachung oder Überprüfung von Fahrzeugfunktionen.

## Beschreibung

Die Erfindung betrifft ein Fahrzeugnetz zur Steuerung und Überwachung eines Fahrzeugs, wobei das Fahrzeugnetz in dem Fahrzeug angeordnet ist und mehrere Steuereinheiten umfasst.

Außerdem betrifft die Erfindung ein Verfahren zur Überwachung oder Überprüfung von Fahrzeugfunktionen.

In heutigen Automobilen sind die unterschiedlichen Steuerungsfunktionen über viele verschiedene elektronische Steuergeräte verteilt. Manche Personenkraftwagen umfassen bis zu achtzig unterschiedliche Steuergeräte. Jedes Steuergerät hat einen Busanschluss, über den es von mindestens einem anderen Steuergerät aus erreicht werden kann. Mehrere dieser Bussysteme (die beispielsweise zehn oder mehr einzelne Bussegmente umfassen) sind miteinander über Gateways vernetzt. In jedem Steuergerät fallen Diagnoseinformationen an, welche zur schnellen Fehlerbehebung in der Werkstatt ausgelesen werden müssen.

In der Praxis kann allerdings aufgrund von Beschränkungen der Bandbreite des Kommunikationsnetzwerks und/oder der Gateways zwischen den Bussystemen nicht jede beliebige Diagnoseinformation über eine zentrale Diagnoseschnittstelle ausgelesen werden. Daher werden zum Konfigurationszeitpunkt des Fahrzeugs (d.h. während der Entwicklung beim OEM) diejenigen Diagnoseinformationen ausgewählt, die voraussichtlich wichtig sind und deshalb über den Bus übertragen werden sollen. Während der Lebensdauer des Fahrzeugs können durch Software-und/oder Hardwareaktualisierungen von Steuergeräten neue Informationen (Nachrichtenarten) hinzukommen, welche an zentraler Stelle dann möglicherweise nicht ohne Weiteres zur Verfügung stehen. Soll auch in dieser Beziehung mit den Updates Schritt gehalten werden, wird eine aufwändige Umkonfiguration der Gateways erforderlich.

Oder der Servicetechniker schließt sein Diagnosegerät (beispielsweise Service-PC) direkt an das Steuergerät an, das für die Fehlfunktion mutmaßlich zuständig ist, um dessen spezifische Diagnoseinformationen auszulesen. Dies kann sehr arbeitsaufwändig sein und unter Umständen auch eine Demontage von Fahrzeugteilen erfordern, da es üblich ist, einen Teil der Steuergeräte an Stellen einzubauen, die im ausgelieferten Fahrzeug unzugänglich sind.

In beiden Fällen entsteht nach Software- und/oder HardwareAktualisierungen, die neue Nachrichtenarten erzeugen, welche nicht ohne Weiteres von der zentralen Diagnoseschnittstelle aus abrufbar sind, zusätzlicher Aufwand, um Fahrzeugfehler schnell und zielgerichtet zu beheben.

Der Erfindung liegt die Aufgabe zugrunde, ein Fahrzeugnetz bereitzustellen, bei dem eine Fehlersuche nicht durch solche Softwareaktualisierungen erschwert wird, die neue Nachrichtenarten einführen, welche zum Herstellungszeitpunkt des Fahrzeugs noch nicht zu Diagnosezwecken vorgesehen waren.

Erfindungsgemäß wird diese Aufgabe dadurch gelöst, dass eine der Steuereinheiten mindestens eine gemeinsame Diagnosevorrichtung zur Durchführung von Diagnoseaufgaben für mehrere der Steuereinheiten umfasst.

In Bezug auf das Verfahren zur Überwachung oder Überprüfung von Fahrzeugfunktionen wird die Aufgabe dadurch gelöst, dass das Verfahren folgende Schritte umfasst:
- Bereitstellen und Inbetriebnehmen eines Fahrzeugnetzes, an dem mehrere Steuereinheiten und eine Diagnosesteuereinheit angeschlossen sind, wobei zumindest eine Teilmenge der Steuereinheiten Diagnosenachrichten ins Fahrzeugnetz ausgibt;
- Entgegennehmen der Diagnosenachrichten durch die Diagnosesteuereinheit;
- Speichern der Diagnosenachrichten in einem Diagnosedatenspeicher;
- Auslesen von Diagnosenachrichten aus dem Diagnosedatenspeicher; und
- Auswerten der ausgelesenen Diagnosenachrichten mittels einer Auswertevorrichtung.

Mittels der Einführung einer zentralen Diagnosefunktion für die E/E-Architektur (E/E = Elektrik und Elektronik) wird die Diagnose von Fehlern in solchen Fahrzeugfunktionen nachhaltig verbessert, die von Steuergeräten verwaltet werden. Durch die Einführung eines zentralen Steuergeräts, auf welchem die Funktionen der unterschiedlichen Steuergeräte (in Gestalt von Softwarefunktionen) zusammengefasst werden, kann eine zentrale Softwarediagnosefunktion Diagnoseinformationen von verschiedenen Softwarekomponenten sammeln. In der Werkstatt braucht dann die Diagnoseinformation nicht mehr von den unterschiedlichen Steuergeräten einzeln abgerufen werden. Da beim Auslesen der Diagnosedaten alles in einem Steuergerät abläuft, braucht beim Auslesen der gespeicherten Diagnosedaten keine Rücksicht auf eine Kommunikationsbandbreite des Fahrzeugnetzes oder auf eine Konfiguration der Gateways genommen werden.

Eine Auswertung der Diagnoseinformationen in Bezug auf ihre Wichtigkeit für einen bestimmten Servicefall kann vollständig offline auf dem zum Service eingesetzten PC erfolgen. Dort steht genügend Rechenleistung zur Verfügung. Auch ein Anschluss an zentrale Servicedatenbanken kann zur Verfügung stehen. Zusätzlich oder alternativ ist es aber auch vorstellbar, dass die Diagnosesteuereinheit dazu vorbereitet ist, dass die Auswertung der Diagnosedaten teilweise oder vollständig innerhalb der Diagnosesteuereinheit durchgeführt wird.

Das bisherige Erfordernis, schon zum Konfigurationszeitpunkt des Automobils alle möglichen Fehlerszenarien zu durchdenken und deren Diagnostizierbarkeit sicherzustellen, entfällt. Dadurch wird Entwicklungs- und Wartungsaufwand für das Fahrzeug verringert. Aufgrund der Möglichkeit, Diagnoseauswertungen offline durchzuführen, können Anforderungen an die Qualifikation des Personals bei der Fehlersuche verringert werden. Denn üblicherweise hat jedes Steuergerät eine eigene Diagnosephilosophie, die offline zu einer einheitlichen Vorgehensweise zusammengeführt werden kann.

Zweckmäßigerweise umfasst die gemeinsame Diagnosevorrichtung einen Datenspeicher für Diagnosedaten mehrerer der Steuereinheiten. Hierdurch können Diagnosedaten von mehreren Steuereinheiten an einer Stelle zusammengeführt und eine steuergeräteübergreifende Auswertung der Diagnosedaten vorbereitet werden. Mittels einer steuergeräteübergreifenden Auswertung ist ein besserer, integrierter Überblick über Fahrzeugzustände und somit eine Verbesserung der Auswertungsergebnisse der Diagnosedaten möglich.

Vorzugsweise umfasst die gemeinsame Diagnosevorrichtung eine Vorrichtung zum Eingliedern von Diagnosedaten mehrerer der Steuereinheiten in den Datenspeicher. Mittels der Vorrichtung zum Eingliedern von Diagnosedaten kann das Eingliedern der Daten in den Datenspeicher vereinheitlicht werden. Dies fördert eine Konzentration von Entwicklungsaufwendungen auf einheitliche Lösungen für das Eingliedern in den Datenspeicher und eine umfassendere Erprobung der dafür entwickelten Funktionen.

Es kann von Vorteil sein, wenn die gemeinsame Diagnosevorrichtung eine Vorrichtung zum Abrufen und/oder Aufnehmen von Diagnosedaten mehrerer der Steuereinheiten umfasst. Mittels der Vorrichtung zum Abrufen und/oder Aufnehmen von Diagnosedaten kann das Abrufen und/oder Aufnehmen von Diagnosedaten vereinheitlicht werden. Dies fördert eine Konzentration von Entwicklungsaufwendungen auf einheitliche Lösungen für das Abrufen und/oder Aufnehmen von Diagnosedaten und eine umfassendere Erprobung der dafür entwickelten Funktionen.

Unabhängig davon kann es zweckmäßig sein, wenn die gemeinsame Diagnosevorrichtung eine Auswertevorrichtung für Diagnosedaten mehrerer der Steuereinheiten umfasst. Mittels der Auswertevorrichtung für Diagnosedaten kann das Abrufen und/oder Aufnehmen von Diagnosedaten vereinheitlicht werden. Dies fördert eine Konzentration von Entwicklungsaufwendungen auf einheitliche Lösungen für eine Auswertevorrichtung für Diagnosedaten und eine umfassendere Erprobung der dafür entwickelten Funktionen.

Besonders vorteilhaft ist, wenn die gemeinsame Diagnosevorrichtung eine Datenschnittstelle zum Anschluss eines mobilen Diagnosearbeitsplatzes umfasst. Hierdurch können die Diagnosedaten auf einen Diagnose-PC oder eine zentrale Datenverarbeitungseinrichtung übertragen werden, mit dem bzw. mit dem eine effizientere und/oder umfassendere und/oder schnellere Auswertung der Diagnosedaten möglich ist.

Die Erfindung ist anhand der beigefügten Zeichnungen näher erläutert, in denen zeigen:
- FIG 1: ein Fahrzeugnetz mit einer übergreifenden Diagnosevorrichtung zur Durchführung von Diagnoseaufgaben mehrerer der Steuereinheiten; und
- FIG 2: ein Ablaufdiagramm für ein Verfahren zur Überwachung oder Überprüfung von Fahrzeugfunktionen.

Die nachfolgend näher geschilderten Ausführungsbeispiele stellen bevorzugte Ausführungsformen der vorliegenden Erfindung dar.

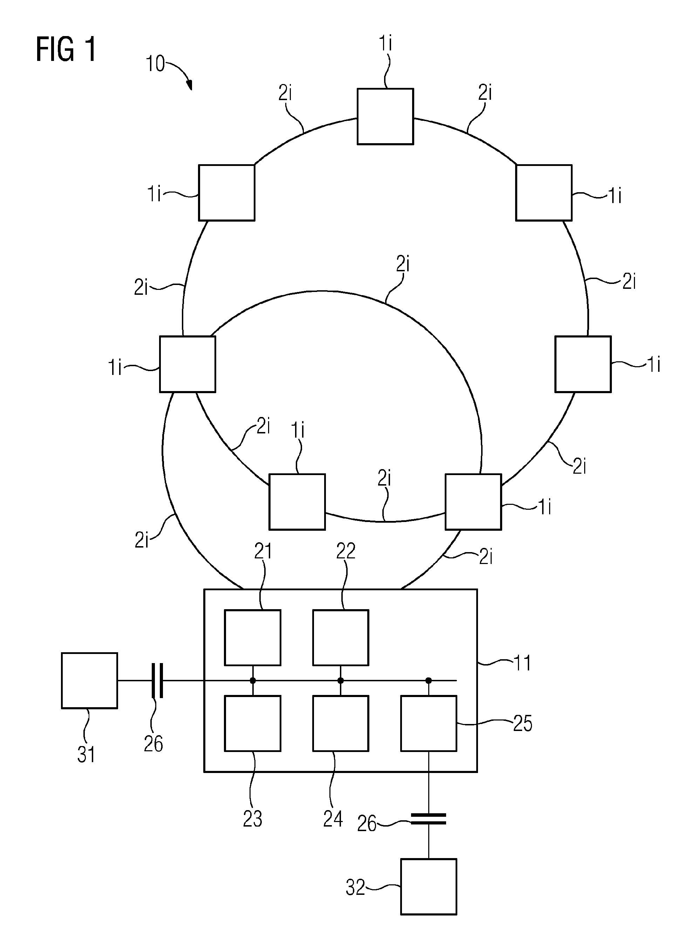

Die FIG 1 zeigt ein Ausführungsbeispiel eines Fahrzeugnetzes 10 (Fahrzeugnetzwerks), das in einem Fahrzeug angeordnet ist und mehrere Steuereinheiten 1i umfasst, sowie Übertragungsstrecken zwischen den Steuereinheiten 1i. Das Fahrzeugnetz 10 ist zur Durchführung einer Vielzahl von Steuerungs- und Überwachungsaufgaben in dem Fahrzeug vorgesehen. Die Steuereinheit 11 umfasst eine gemeinsame Diagnosevorrichtung zur Wahrnehmung von Diagnoseaufgaben für mehrere der Steuereinheiten 1i. Zweckmäßigerweise umfasst die gemeinsame Diagnosevorrichtung 11 einen Datenbus 20, über den die Funktionseinheiten 21, 22, 23, 24, 25 der Diagnosevorrichtung 11 kommunizieren.

Eine zweckmäßige Weiterbildung sieht vor, dass die gemeinsame Diagnosevorrichtung 11 einen Datenspeicher 21 für Diagnosedaten mehrerer der Steuereinheiten 1i umfasst.

Darauf baut eine besonders bevorzugte Weiterbildung auf, in der die gemeinsame Diagnosevorrichtung 11 eine Vorrichtung 22 umfasst, die dazu vorbereitet ist, ein Eingliedern von Diagnosedaten mehrerer der Steuereinheiten 1i in den Datenspeicher 21 durchzuführen.

Es kann von Vorteil sein, wenn die gemeinsame Diagnosevorrichtung 11 eine Vorrichtung 23 zum Abrufen und/oder Aufnehmen von Diagnosedaten mehrerer der Steuereinheiten 1i umfasst.

Besonders bevorzugt ist es, wenn die gemeinsame Diagnosevorrichtung eine Auswertevorrichtung 24 für Diagnosedaten mehrerer der Steuereinheiten 1i umfasst.

Außerdem ist es zweckmäßig, wenn die gemeinsame Diagnosevorrichtung 11 eine Datenschnittstelle 26 zum Anschluss eines mobilen Diagnosearbeitsplatz 31, 32 umfasst. Zur Ausführung eines Datenprotokolls auf der Datenschnittstelle 26, kann ein Schnittstellenadapter 25 vorgesehen sein.

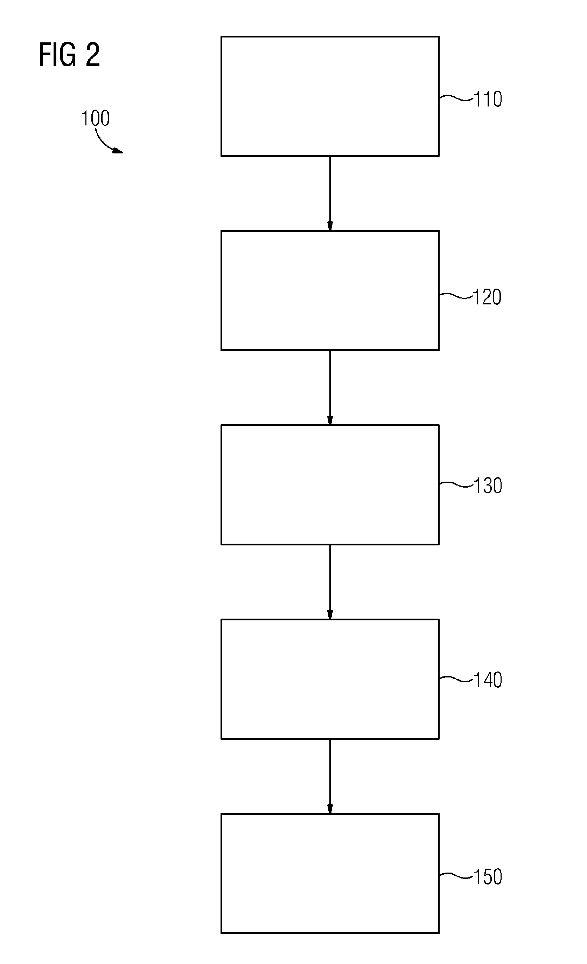

Das in FIG 2 gezeigte Verfahren 100 zur Überwachung oder Überprüfung von Fahrzeugfunktionen umfasst folgende Schritte. In einem ersten Schritt 110 wird ein Fahrzeugnetz 10 bereitgestellt, an dem mehrere Steuereinheiten 1i und eine Diagnosesteuereinheit 11 angeschlossen sind. Hierbei ist zumindest eine Teilmenge der Steuereinheiten 1i dazu vorbereitet, Diagnosenachrichten ins Fahrzeugnetz 10 auszugeben. In einem zweiten Schritt 120 werden Diagnosenachrichten von der Diagnosesteuereinheit 11 entgegengenommen. In einem dritten Schritt 130 werden Diagnosenachrichten in einem Diagnosedatenspeicher 21 gespeichert. In einem vierten Schritt 140 werden Diagnosenachrichten aus dem Diagnosedatenspeicher 21 ausgelesen. In einem fünften Schritt 150 werden die ausgelesenen Diagnosenachrichten ausgewertet.

## Patentansprüche

1. Fahrzeugnetz (10) zur Steuerung und Überwachung eines Fahrzeugs, wobei das Fahrzeugnetz (10) in dem Fahrzeug angeordnet ist und mehrere Steuereinheiten (1i) umfasst, **dadurch gekennzeichnet, dass** eine der Steuereinheiten (1i) mindestens eine gemeinsame Diagnosevorrichtung (11) zur Durchführung von Diagnoseaufgaben für mehrere der Steuereinheiten (1i) umfasst.

2. Fahrzeugnetz (10) nach Anspruch 1, **dadurch gekennzeichnet, dass** die gemeinsame Diagnosevorrichtung (11) einen Datenspeicher (21) für Diagnosedaten mehrerer der Steuereinheiten (1i) umfasst.

3. Fahrzeugnetz (10) nach Anspruch 2, **dadurch gekennzeichnet, dass** die gemeinsame Diagnosevorrichtung (11) eine Vorrichtung (22) zum Eingliedern von Diagnosedaten mehrerer der Steuereinheiten (1i) in den Datenspeicher (21) umfasst.

4. Fahrzeugnetz (10) nach Anspruch 3, **dadurch gekennzeichnet, dass** die gemeinsame Diagnosevorrichtung (11) eine Vorrichtung (23) zum Abrufen und/oder Aufnehmen von Diagnosedaten mehrerer der Steuereinheiten (1i) umfasst.

5. Fahrzeugnetz (10) nach einem der Ansprüche 1 bis 4,
**dadurch gekennzeichnet, dass** die gemeinsame Diagnosevorrichtung (11) eine Auswertevorrichtung (24) für Diagnosedaten mehrerer der Steuereinheiten (1i) umfasst.

6. Fahrzeugnetz (10) nach einem der Ansprüche 1 bis 5,
**dadurch gekennzeichnet, dass** die gemeinsame Diagnosevorrichtung (11) eine Datenschnittstelle (26) zum Anschluss eines mobilen Diagnosearbeitsplatzes (31,32) umfasst.

7. Verfahren (100) zur Überwachung oder Überprüfung von Fahrzeugfunktionen, **dadurch gekennzeichnet, dass** das Verfahren (100) folgende Schritte (110,120,130,140,150) umfasst:
- Bereitstellen und Inbetriebnehmen (110) eines Fahrzeugnetzes, an dem mehrere Steuereinheiten (1i) und eine Diagnosesteuereinheit (11) angeschlossen sind, wobei zumindest eine Teilmenge der Steuereinheiten (1i) Diagnosenachrichten ins Fahrzeugnetz (10) ausgibt;
- Entgegennehmen (120) der Diagnosenachrichten durch die Diagnosesteuereinheit (11);
- Speichern (130) der Diagnosenachrichten in einem Diagnosedatenspeicher (21);
- Auslesen (140) von Diagnosenachrichten aus dem Diagnosedatenspeicher (21); und
- Auswerten (150) der ausgelesenen Diagnosenachrichten mittels einer Auswertevorrichtung (24,31,32).
